(19) Europäisches Patentamt
European Patent Office
Office européen des brevets

(11) EP 4 084 123 A1

(12) EUROPEAN PATENT APPLICATION
published in accordance with Art. 153(4) EPC

(43) Date of publication:
02.11.2022 Bulletin 2022/44

(21) Application number: 20908172.8

(22) Date of filing: 25.12.2020

(51) International Patent Classification (IPC):
$H01M\ 4/13^{(2010.01)}$    $H01M\ 4/139^{(2010.01)}$
$H01M\ 4/62^{(2006.01)}$    $H01M\ 10/052^{(2010.01)}$
$H01M\ 10/0562^{(2010.01)}$    $H01B\ 1/06^{(2006.01)}$
$H01B\ 1/10^{(2006.01)}$    $H01B\ 13/00^{(2006.01)}$

(52) Cooperative Patent Classification (CPC):
H01B 1/06; H01B 1/10; H01B 13/00; H01M 4/13;
H01M 4/139; H01M 4/62; H01M 10/052;
H01M 10/0562; Y02E 60/10; Y02P 70/50

(86) International application number:
PCT/JP2020/048634

(87) International publication number:
WO 2021/132538 (01.07.2021 Gazette 2021/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.12.2019 JP 2019239137

(71) Applicant: Mitsui Mining & Smelting Co., Ltd.
Shinagawa-ku
Tokyo 141-8584 (JP)

(72) Inventors:
• NAKAYAMA, Yuki
Ageo-shi, Saitama 362-0025 (JP)
• ITO, Takahiro
Ageo-shi, Saitama 362-0025 (JP)
• TAKAHASHI, Tsukasa
Ageo-shi, Saitama 362-0025 (JP)
• YAGI, Teruaki
Ageo-shi, Saitama 362-0025 (JP)

(74) Representative: Novagraaf Technologies
Bâtiment O2
2, rue Sarah Bernhardt
CS90017
92665 Asnières-sur-Seine Cedex (FR)

(54) **SULFIDE SOLID ELECTROLYTE AND METHOD FOR MANUFACTURING SAME**

(57) An object of the present invention is to provide a sulfide solid electrolyte having a reduced specific surface area; an electrode composite material, a slurry and a solid battery, in each of which the sulfide solid electrolyte is used; and a method of producing the sulfide solid electrolyte, and the present invention provides a sulfide solid electrolyte containing lithium (Li), phosphorus (P) and sulfur (S) elements, and also containing a crystal phase having peaks at positions of $2\theta = 23.2° \pm 1.00°$ and $29.2° \pm 0.500°$ in an X-ray diffraction pattern measured with CuKα1 radiation.

Fig. 1

(1) Intermediate Provision Step

Intermediate
(Sulfide Solid Electrolyte Material)

Thermal Treatment

(2) Thermal Treatment Step

Sulfide Solid Electrolyte of Present Invention

EP 4 084 123 A1

**Description**

BACKGROUND OF THE INVENTION

**Field of the Invention**

The present invention relates to: a sulfide solid electrolyte; an electrode composite material, a slurry and a battery, in each of which the sulfide solid electrolyte is used; and a method of producing the sulfide solid electrolyte.

**Background Art**

A solid-state battery is characterized by being superior in production cost and productivity since a flammable organic solvent is not used and thus a safety device can be simplified, and by achieving high voltage when being stacked in series in a cell. In addition, it is expected that safety and durability can be improved since, in a sulfide solid electrolyte used for a solid-state battery, only lithium ions move and thus a side reaction due to movements of anions does not occur.
As a sulfide solid electrolyte, a sulfide solid electrolyte containing a crystal phase having an argyrodite-type crystal structure has been known (for example, Patent Documents 1 to 5).
As a method of producing a sulfide solid electrolyte, there has been known a method of producing a sulfide solid electrolyte, in which a raw material containing lithium (Li), sulfur (S) and phosphorus (P) elements as constituent elements is subjected to thermal treatment to obtain a sulfide solid electrolyte having an argyrodite-type crystal structure, and the sulfide solid electrolyte is pulverized to obtain a sulfide solid electrolyte precursor, which is then subjected to thermal treatment at a temperature at which grain growth of the sulfide solid electrolyte precursor does not occur (Patent Document 6).
Patent Document 6 discloses that a sulfide solid electrolyte having an average particle size $D_{50}$ of 2.1 $\mu$m to 4.5 $\mu$m is obtained by the above production method.

**Prior Art Document**

[Patent Document]

Patent Document 1: JP 2001-250580 A
Patent Document 2: JP 2016-024874 A
Patent Document 3: JP 2010-033732 A
Patent Document 4: JP 2011-044249 A
Patent Document 5: JP 2012-043646 A
Patent Document 6: JP 2019-036536 A

SUMMARY OF THE INVENTION

In an all-solid-state battery, in order to obtain good battery characteristics, it is preferable to uniformly distribute a sulfide solid electrolyte inside positive and negative electrodes. In order to realize the uniform distribution of the sulfide solid electrolyte, it is preferable to reduce the particle size of the sulfide solid electrolyte. The particle size of the sulfide solid electrolyte can be reduced by pulverizing the sulfide solid electrolyte. However, the pulverization results in fine particles and particles distorted in shape, and thus results in an increase in the specific surface area of the sulfide solid electrolyte, and a slurry containing the sulfide solid electrolyte has an increased viscosity. Consequently, a large amount of solvent is required in order to adjust the viscosity of the slurry, and thus the cost increases and the battery productivity decreases. Accordingly, there is a need to reduce the specific surface area of the sulfide solid electrolyte.
When the sulfide solid electrolyte reacts with atmospheric moisture, toxic hydrogen sulfide gas generates and the ionic conductivity decreases because of decomposition. Consequently, the cost increases in order to maintain a low moisture environment during the production of the battery, and the productivity of the battery decreases. If the solid electrolyte has a low specific surface area, this will make it possible to reduce the area of the surface where the reaction between the solid electrolyte and atmospheric moisture occurs and thus suppress the progress of the reaction. Accordingly, from these viewpoints as well, there is a need to reduce the specific surface area of the sulfide solid electrolyte.
Thus, an object of the present invention is to provide a sulfide solid electrolyte having a reduced specific surface area; an electrode composite material, a slurry and a solid battery, in each of which the sulfide solid electrolyte is used; and a method of producing the sulfide solid electrolyte.

As a result of subjecting a sulfide solid electrolyte material containing lithium (Li), phosphorus (P) and sulfur (S) elements used as an intermediate to thermal treatment under predetermined conditions, the present inventors have obtained new finding that the specific surface area of the resulting sulfide solid electrolyte is reduced. As a result of further intensive study on the resulting sulfide solid electrolyte, the present inventors have also found that a crystal phase having peaks at positions of $2\theta = 23.2° \pm 1.00°$ and $29.2° \pm 0.500°$, in an X-ray diffraction pattern measured with CuK$\alpha$1 radiation, is produced in the sulfide solid electrolyte. It is presumed that the crystal phase having peaks at positions of $2\theta = 23.2° \pm 1.00°$ and $29.2° \pm 0.500°$, in an X-ray diffraction pattern measured with CuK$\alpha$1 radiation, is produced by subjecting the intermediate to thermal treatment to cause a reaction of fine particles contained in the intermediate. The present invention has been completed based on these findings, and thus the present invention includes the following inventions.

[1] A sulfide solid electrolyte, containing lithium (Li), phosphorus (P) and sulfur (S) elements,
wherein, in an X-ray diffraction pattern measured with CuK$\alpha$1 radiation, peaks are present at positions of $2\theta = 23.2° \pm 1.0°$ and $29.2° \pm 0.5°$.
[2] An electrode composite material, containing the sulfide solid electrolyte according to [1] and an active material.
[3] A slurry, containing the sulfide solid electrolyte according to [1] and a dispersion medium.
[4] A battery, including a positive electrode layer, a negative electrode layer and a solid electrolyte layer located between the positive electrode layer and the negative electrode layer, wherein the solid electrolyte layer contains the sulfide solid electrolyte according to [1].
[5] A method of producing a sulfide solid electrolyte, the method including the steps of:

(1) providing as an intermediate a sulfide solid electrolyte material that contains lithium (Li), phosphorus (P) and sulfur (S) elements; and
(2) subjecting the intermediate to thermal treatment to obtain the sulfide solid electrolyte according to [1].

The present invention provide a sulfide solid electrolyte having a reduced specific surface area; an electrode composite material, a slurry and a solid battery, in each of which the sulfide solid electrolyte is used; and a method of producing the sulfide solid electrolyte.

BRIEF DESCRIPTION OF THE DRAWINGS

FIG. 1 is a process diagram showing an example of the method of producing the sulfide solid electrolyte of the present invention.
FIG. 2 is a process diagram showing an example of step (1) in the method of producing the sulfide solid electrolyte of the present invention.
FIG. 3 is a process diagram showing an example of step (2) in the method of producing the sulfide solid electrolyte of the present invention.
FIG. 4 is a diagram showing the X-ray diffraction patterns of the sulfide solid electrolytes produced in Comparative Example 1 and Examples 1 to 5.

DETAILED DESCRIPTION OF THE INVENTION

<<Descriptions of terms>>

The terms used in the present specification are described below. The following descriptions of the terms are applied throughout the present specification unless otherwise specified.

<Powder>

A powder means a plurality of particles.

<$D_{10}$, $D_{50}$ and $D_{95}$>

Regarding a powder, the $D_{10}$, $D_{50}$ and $D_{95}$ of the powder mean particle sizes at cumulative volumes of 10%, 50% and 95%, respectively, in a volume-based particle size distribution of the powder measured by a laser diffraction scattering particle size distribution measurement method. The unit is $\mu m$. The $D_{10}$, $D_{50}$ and $D_{95}$ are measured, for example, according to the conditions described in Examples. The $D_{50}$ is generally referred to as a median diameter.

<BET specific surface area>

Regarding a powder, the BET specific surface area of the powder means a specific surface area of the powder measured by a gas adsorption method using nitrogen gas. The unit is $m^2/g$. The BET specific surface area is measured, for example, according to the conditions described in Examples.

<True density>

Regarding a powder, the true density of the powder means a density of the powder as measured by pycnometry. The unit is $g/cm^3$. The true density is measured, for example, according to the conditions described in Examples.

<CS value>

Regarding a powder, the CS value of the powder means a surface area per unit volume of the powder calculated on the assumption that each of the particles constituting the powder has a spherical shape. The unit is $m^2/cm^3$. The CS value of the powder is calculated from the following formula: CS value $(m^2/cm^3)$ = 6/MA, based on a volume-based particle size distribution of the powder measured by a laser diffraction scattering particle size distribution measurement method. In the above formula, MA represents an area average particle size $(\mu m)$, and is obtained from the formula: MA $(\mu m) = \Sigma Vi/\Sigma(Vi/di)$, wherein Vi represents a frequency and di represents a median value in a particle size class. The CS value is measured, for example, according to the conditions described in Examples.

<(AxB)/C>

Regarding a powder, the value calculated from the following formula: (AxB)/C, wherein A represents the BET specific surface area $(m^2/g)$ of the powder, B represents the true density $(g/cm^3)$ of the powder, and C represents the CS value $(m^2/cm^3)$ of the powder, means the ratio of the specific surface area $(m^2/g)$ obtained by the BET measurement to the surface area value $(m^2/g)$ obtained by multiplying the CS value $(m^2/cm^3)$ calculated from the particle size distribution measurement on the assumption that the particles are spherical in shape, by the true density $(g/cm^3)$. That is, if the value calculated from the above formula is closer to 1.0, this will means that each of the particles constituting the powder has a shape closer to a spherical shape.

«Sulfide solid electrolyte»

The sulfide solid electrolyte of the present invention contains lithium (Li), phosphorus (P) and sulfur (S) elements.
The contents of the lithium (Li), phosphorus (P) and sulfur (S) elements in the sulfide solid electrolyte of the present invention can be appropriately adjusted.
From the viewpoint of improving the lithium ion conductivity of the sulfide solid electrolyte of the present invention, the content of the lithium (Li) element is preferably 41 mol% or more and 50 mol% or less, more preferably 41 mol% or more and 48 mol% or less, still more preferably 42 mol% or more and 47 mol% or less, and yet more preferably 43 mol% or more and 45 mol% or less, based on the total molar amount of the constituent elements of the sulfide solid electrolyte.
From the viewpoint of improving the lithium ion conductivity of the sulfide solid electrolyte of the present invention, the content of the phosphorus (P) element is preferably 7.0 mol% or more and 20 mol% or less, more preferably 7.2 mol% or more and 18 mol% or less, still more preferably 7.5 mol% or more and 16 mol% or less, and yet more preferably 7.7 mol% or more and 12 mol% or less, based on the total molar amount of the constituent elements of the sulfide solid electrolyte.
From the viewpoint of improving the lithium ion conductivity of the sulfide solid electrolyte of the present invention, the content of the sulfur (S) element is preferably 31 mol% or more and 43 mol% or less, more preferably 32 mol% or more and 42 mol% or less, still more preferably 33 mol% or more and 40 mol% or less, and yet more preferably 34 mol% or more and 38 mol% or less, based on the total molar amount of the constituent elements of the sulfide solid electrolyte.
From the viewpoint of improving the lithium ion conductivity of the sulfide solid electrolyte of the present invention, the content of the lithium (Li) element to the phosphorus (P) element (the content of the lithium (Li) element/the content of the phosphorus (P) element) is, in a molar ratio, preferably 4.8 or more and 7.0 or less, more preferably 5.0 or more and 6.4 or less, and still more preferably 5.2 or more and 5.8 or less.
From the viewpoint of improving the lithium ion conductivity of the sulfide solid electrolyte of the present invention, the content of the sulfur (S) element to the phosphorus (P) element (the content of the sulfur (S) element/the content of the phosphorus (P) element) is, in a molar ratio, preferably 3.6 or more and 6.0 or less, more preferably 4.0 or more and 5.0 or less, and still more preferably 4.2 or more and 4.6 or less.

From the viewpoint of improving the lithium ion conductivity of the sulfide solid electrolyte of the present invention, it is preferable that the sulfide solid electrolyte further contains at least one halogen (X) element selected from fluorine (F), chlorine (Cl), bromine (Br) and iodine (I) elements, and it is more preferable that the sulfide solid electrolyte further contains at least one halogen (X) element selected from chlorine (Cl) and bromine (Br) elements.

The content of the halogen (X) element(s) can be adjusted appropriately.

From the viewpoint of improving the lithium ion conductivity of the sulfide solid electrolyte of the present invention, the content of the halogen (X) element(s) is preferably 3.7 mol% or more and 19 mol% or less, more preferably 4.0 mol% or more and 17 mol% or less, still more preferably 8.0 mol% or more and 15 mol% or less, and yet more preferably 10 mol% or more and 14 mol% or less, based on the total molar amount of the constituent elements of the sulfide solid electrolyte. When the sulfide solid electrolyte of the present invention contains two or more halogen (X) elements, the "content of the halogen (X) element(s)" means the total content of the two or more halogen (X) elements.

From the viewpoint of improving the lithium ion conductivity of the sulfide solid electrolyte of the present invention, the content of the halogen (X) element(s) to the phosphorus (P) element (the content of the halogen (X) element(s)/the content of the phosphorus (P) element) is, in a molar ratio, preferably 0.50 or more and 2.1 or less, more preferably 0.80 or more and 2.0 or less, and still more preferably 1.2 or more and 1.8 or less.

The sulfide solid electrolyte of the present invention may contain one or two or more elements other than the lithium (Li), phosphorus (P), sulfur (S) and halogen (X) elements (hereinafter referred to as "other element(s)"). Examples of the other element(s) include silicon (Si), germanium (Ge), tin (Sn), lead (Pb), boron (B), aluminum (Al), gallium (Ga), arsenic (As), antimony (Sb) and bismuth (Bi) elements and the like.

The total molar amount of the constituent elements of the sulfide solid electrolyte and the molar amount of each of the constituent elements can be determined by using a known method such as inductively coupled plasma atomic emission spectroscopy (ICP-AES) or the like to measure the contents of the elements in a solution obtained by dissolving the sulfide solid electrolyte by alkali fusion or the like.

The sulfide solid electrolyte of the present invention has peaks at positions of $2\theta = 23.2° \pm 1.0°$ and $29.2° \pm 0.50°$ in an X-ray diffraction pattern measured with CuK$\alpha$1 radiation. When the peaks are derived from a certain crystal phase, the crystal phase is considered to be a crystal phase having a crystal structure belonging to the space group Pmna (hereinafter sometimes simply abbreviated to "Pmna phase" or "first crystal phase").

The lower limit of the content of the first crystal phase is not particularly limited. The content of the first crystal phase may be, for example, 0.01 mass% or more, 0.1 mass% or more or 1 mass% or more, based on the contents of all the crystal phases constituting the sulfide solid electrolyte of the present invention. The upper limit of the content of the first crystal phase is not also particularly limited. The content of the first crystal phase may be 20 mass% or less, 5 mass% or less or 3 mass% or less, based on the contents of all the crystal phases constituting the sulfide solid electrolyte of the present invention. The ratio of the crystal phases can be confirmed by, for example, XRD measurement.

The fact that the sulfide solid electrolyte of the present invention has peaks at the above-mentioned predetermined positions can be confirmed by an X-ray diffraction pattern measured with CuK$\alpha$ radiation. As the CuK$\alpha$ radiation, for example, CuK$\alpha$1 radiation can be used.

In an X-ray diffraction pattern of the sulfide solid electrolyte of the present invention measured with CuK$\alpha$1 radiation, peaks may be present at positions of $2\theta = 19.5° \pm 1.0°$ and $30.5° \pm 0.50°$, in addition to positions of $2\theta = 23.2° \pm 1.0°$ and $29.2° \pm 0.50°$. The peaks that appear at positions of $2\theta = 19.5° \pm 1.0°$ and $30.5° \pm 0.50°$ are derived from the first crystal phase, similarly to the peaks that appear at positions of $2\theta = 23.2° \pm 1.0°$ and $29.2° \pm 0.50°$.

Each of the positions of the peaks derived from the first crystal phase is represented by a median value $\pm 1.0°$ or a median value $\pm 0.50°$, but preferably by a median value $\pm 0.50°$, and more preferably by a median value $\pm 0.30°$.

Hereinafter, in an X-ray diffraction pattern of the sulfide solid electrolyte of the present invention measured with CuK$\alpha$1 radiation, peaks present at positions of $2\theta = 19.5 \pm 1.0°$, $23.2 \pm 1.0°$, $29.2 \pm 0.50°$ and $30.5 \pm 0.50°$, derived from the first crystal phase, are sometimes referred to as "peak $P_1$", "peak $P_2$", "peak $P_3$" and "peak $P_4$", respectively.

Whether or not peaks are present in each of the above-mentioned ranges in the X-ray diffraction pattern can be determined, for example, as follows. The average value of the intensities of 10 points from $+0.7°$ of the assumed peak position to the high angle side, and the average value of the intensities of 10 points from $-0.7°$ of the assumed peak position to the low angle side each are defined as the background. At this time, the former is defined as the background 1 and the latter is defined as the background 2. The intensity 1 obtained by subtracting the background 1 from the measurement data, and the intensity 2 obtained by subtracting the background 2 from the measurement data are calculated, and the position where at least one intensity of the obtained two intensities has a maximum of 40 counts or more is defines as the peak, and the intensity at that position is defined as the peak intensity of the peak. However, the conditions are selected so that the maximum peak intensity becomes 10,000 counts or more, followed by the measurement. It was confirmed that, in all the sulfide solid electrolytes obtained in Examples 1 to 5 mentioned later, peaks are present at positions of $2\theta = 23.2° \pm 1.0°$ and $29.2° \pm 0.5°$.

From the viewpoint of improving the lithium ion conductivity of the sulfide solid electrolyte of the present invention, the sulfide solid electrolyte of the present invention preferably exhibits peaks at positions of $2\theta = 15.34° \pm 1.0°$ and $25.19° \pm 1.0°$ in an X-ray diffraction pattern measured with CuK$\alpha$1 radiation. The peak is derived from a crystal phase having an argylodite-type crystal structure (hereinafter sometimes simply abbreviated to "argyrodite-type crystal phase" or "second crystal phase"). In other words, the sulfide solid electrolyte of the present invention preferably contains an argylodite-type crystal phase from the viewpoint of improving lithium ion conductivity. The argyrodite-type crystal structure is a crystal structure possessed by a group of compounds derived from a mineral represented by the chemical formula: $A_{98}GeS_6$. The argyrodite-type crystal structure preferably belongs to a cubic crystal system.

When the sulfide solid electrolyte of the present invention contains a first crystal phase and a second crystal phase, the sulfide solid electrolyte of the present invention may be composed of a first crystal phase and a second crystal phase, and may be composed of a first crystal phase and a second crystal phase, and one or more other phases. The other phase(s) may be a crystal phase or an amorphous phase. Examples of the other phase(s) include $Li_2S$ phase, LiCl phase, LiBr phase, $LiBr_xCl_{1-x}$ ($0 < x < 1$), $Li_3PS_4$ phase and the like.

The content of the second crystal phase may be, for example, 10 mass% or more, 20 mass% or more or 50 mass% or more, based on the contents of all the crystal phases constituting the sulfide solid electrolyte of the present invention. In particular, the sulfide solid electrolyte of the present invention preferably contains the second crystal phase as a main phase. The "main phase" herein means a phase having the largest content with respect to the total content of all the crystal phases contained in the sulfide solid electrolyte of the present invention. When the second crystal phase is contained as a main phase, the content of the argyrodite-type crystal phase is preferably, for example, 60 mass% or more, and more preferably 70 mass% or more, 80 mass% or more, or 90 mass% or more in particular, based on the contents of all the crystal phases contained in the sulfide solid electrolyte of the present invention. The ratio of the crystal phases can be confirmed by, for example, XRD measurement.

In one embodiment, the second crystal phase has a composition represented by the following formula (I).

$$Li_aPS_bX_c \qquad (I)$$

X is at least one halogen element selected from fluorine (F), chlorine (Cl), bromine (Br) and iodine (I) elements. An iodine (I) element tends to reduce the lithium ion conductivity, and a fluorine (F) element is difficult to be introduced in the crystal structure. Therefore, X is preferably at least one halogen element selected from chlorine (Cl) and bromine (Br) elements.

From the viewpoint of improving the lithium ion conductivity of the sulfide solid electrolyte of the present invention, a is preferably 3.0 or more and 6.5 or less, more preferably 3.5 or more and 6.3 or less, and still more preferably 4.0 or more and 6.0 or less. When a has the above lower limit, it is possible to suppress a decrease in amount of Li in the crystal structure and suppress deterioration of the lithium ion conductivity. On the other hand, when a has the above upper limit, it is possible to suppress a decrease in number of pores of the Li sites and suppress deterioration of the lithium ion conductivity.

From the viewpoint of improving the lithium ion conductivity of the sulfide solid electrolyte of the present invention, b is preferably 3.5 or more and 5.5 or less, more preferably 4.0 or more and 5.3 or less, and still more preferably 4.2 or more and 5.0 or less.

From the viewpoint of improving the lithium ion conductivity of the sulfide solid electrolyte of the present invention, c is preferably 0.50 or more and 3.0 or less, more preferably 0.70 or more and 2.5 or less, and still more preferably 1.0 or more and 1.8 or less.

In another embodiment, the second crystal phase has a composition represented by the following formula (II).

$$Li_{7-d}PS_{6-d}X_d \qquad (II)$$

The composition represented by formula (II) is the stoichiometric composition of a crystal phase having an argyrodite-type crystal structure.

In formula (II), X has the same meaning as in formula (I).

From the viewpoint of improving the lithium ion conductivity of the sulfide solid electrolyte of the present invention, d is preferably 0.40 or more and 2.2 or less, more preferably 0.80 or more and 2.0 or less, and still more preferably 1.2 or more and 1.8 or less.

In formula (I) or (II), P may be partially substituted with one or more elements selected from silicon (Si), germanium (Ge), tin (Sn), lead (Pb), boron (B), aluminum (Al), gallium (Ga), arsenic (As), antimony (Sb) and bismuth (Bi) elements. In this case, formula (I) is changed to $Li_a(P_{1-y}M_y)S_bX_c$, and formula (II) is changed to $Li_{7-d}(P_{1-y}M_y)S_{6-d}X_d$. M is one or more elements selected from silicon (Si), germanium (Ge), tin (Sn), lead (Pb), boron (B), aluminum (Al), gallium (Ga), arsenic (As), antimony (Sb) and bismuth (Bi) elements. Preferably, y is 0.010 or more and 0.70 or less, more preferably 0.020 or more and 0.40 or less, and still more preferably 0.050 or more and 0.20 or less.

The fact that the sulfide solid electrolyte of the present invention contains the second crystal phase can be confirmed by an X-ray diffraction pattern measured with CuKa radiation. For example, CuK$\alpha$1 radiation can be used as the CuKa radiation.

In the X-ray diffraction pattern of the sulfide solid electrolyte of the present invention measured with CuK$\alpha$1 radiation, it is more preferable that peaks derived from the second crystal phase are present at one or more positions selected from $2\theta = 17.74° \pm 1.0°$, $29.62° \pm 1.0°$, $30.97° \pm 1.0°$, $44.37° \pm 1.0°$, $47.22° \pm 1.0°$ and $51.70° \pm 1.0°$, in addition to positions of $2\theta = 15.34° \pm 1.0°$ and $25.19° \pm 1.0°$, and it is still more preferable that peaks derived from the second crystal phase are present at all the positions of $2\theta = 17.74° \pm 1.0°$, $29.62° \pm 1.0°$, $30.97° \pm 1.0°$, $44.37° \pm 1.0°$, $47.22° \pm 1.0°$ and $51.70° \pm 1.0°$, in addition to positions of $2\theta = 15.34° \pm 1.0°$ and $2\theta = 25.19° \pm 1.0°$. The position of the peak derived from the second crystal phase is represented by a median value $\pm 1.0°$, but preferably by a median value $\pm 0.50°$, and more preferably by a median value $\pm 0.30°$.

In the X-ray diffraction pattern of the sulfide solid electrolyte of the present invention measured with CuK$\alpha$1 radiation, the peak having the maximum intensity of the peaks derived from the second crystal phase is usually a peak which is present at the position of $2\theta = 29.62° \pm 1.0°$. Hereinafter, the peak derived from the second crystal phase, which is present at the position of $2\theta = 29.62° \pm 1.0°$, is sometimes referred to as "peak $P_A$".

When the sulfide solid electrolyte of the present invention contains a first crystal phase and a second crystal phase, in the X-ray diffraction pattern of the sulfide solid electrolyte of the present invention measured with CuK$\alpha$1 ray, the percentage of the intensity of the peak $P_1$ to the intensity of peak $P_A$ (intensity of the peak Pi/intensity of the peak $P_A \times 100$) is preferably 0.010% or more and 40% or less, more preferably 0.030% or more and 30% or less, and still more preferably 0.070% or more and 20% or less. When the ratio is within the above range, the effect of the present invention becomes more remarkable.

When the sulfide solid electrolyte of the present invention contains a first crystal phase and a second crystal phase, in the X-ray diffraction pattern of the sulfide solid electrolyte of the present invention measured with CuK$\alpha$1 ray, the percentage of the intensity of the peak $P_2$ to the intensity of peak $P_A$ (intensity of the peak $P_2$/intensity of the peak $P_A \times 100$) is preferably 0.010% or more and 40% or less, more preferably 0.050% or more and 30% or less, and still more preferably 0.10% or more and 20% or less. When the ratio is within the above range, the effect of the present invention becomes more remarkable.

When the sulfide solid electrolyte of the present invention contains a first crystal phase and a second crystal phase, in the X-ray diffraction pattern of the sulfide solid electrolyte of the present invention measured with CuK$\alpha$1 ray, the percentage of the intensity of the peak $P_3$ to the intensity of the peak $P_A$ (intensity of the peak $P_3$/intensity of the peak $P_A \times 100$) is preferably 0.010% or more and 99% or less, more preferably 0.10% or more and 97% or less, and still more preferably 1.0% or more and 95% or less. When the ratio is within the above range, the effect of the present invention becomes more remarkable.

The peak intensities of peaks $P_A$ and $P_3$ are obtained as follows. A straight line connecting the average intensity between $2\theta = 26.5°$ to $26.9°$ and the average intensity between $2\theta = 37.5°$ to $37.9°$ is defined as the background, and the background is subtracted from the measurement data of each peak. The peak intensities of $P_A$ and $P_3$ are obtained using the values. A peak usually has a maximum, and the maximum value is the peak intensity.

Usually, the peak intensities of the peaks $P_1$ and $P_2$ having low intensities are obtained as follows. The average value of the intensities of 10 points from $+0.7°$ of the assumed peak position to the high angle side is defined as the background, and the background is subtracted from the measurement data. The position where the intensity has a maximum of 40 counts or more is defined as a peak, and the intensity at that position is defined as the peak intensity of the peak. However, the conditions are selected so that the maximum peak intensity becomes 10,000 counts or more, followed by measurement.

In the X-ray diffraction pattern of the sulfide solid electrolyte of the present invention measured with CuK$\alpha$1 ray, even if the peak derived from the first crystal phase overlaps with other peaks, and it is difficult to perform peak resolution, it is possible to determine the position of the peak derived from the first crystal phase by, for example, the integrated X-ray analysis software PDXL2 (manufactured by Rigaku Corporation), or the first-order differential value or intensity.

The method using the integrated X-ray analysis software PDXL2 is performed as follows. First, automatic is selected from the data processing, and the calculation and confirmation are carried out. Next, from the background edit of the menu of PDXL2, editing is performed so that the background of the measurement data becomes a curve that is sufficiently extrapolated. Next, optimization is performed, and the position of the peak is determined from the obtained results in a state where the background and the peak of the measured data and the calculated value can be sufficiently extrapolated.

The method using the first-order differential value is performed as follows. The weighted moving average of 7 points is carried out on the measured data by a calculation program such as EXCEL, and the weighted moving average of 7 points is further carried out on the obtained calculation results to obtain I average (x). With respect to the obtained I average (x), the difference between adjacent data is used as the first-order differential value, and the peak is defined as the position where the first derivative value is switched from positive to negative and becomes zero, or the position where the first-order differential value is minimized near the assumed peak.

$$I \text{ average } (x) = \{I(x-3) + I(x-2) + I(x-1) + I(x) + I(x+1) + I(x+2) + I(x+3)\}/7$$

The form of the sulfide solid electrolyte of the present invention is preferably in the form of a powder.

Even if the particle size of the sulfide solid electrolyte of the present invention ($D_{10}$, $D_{50}$ or $D_{95}$) is equivalent to or significantly larger than that of the sulfide solid electrolyte containing no first crystal phase, the specific surface area (BET specific surface area) of the sulfide solid electrolyte of the present invention can be significantly reduced from the specific surface area (BET specific surface area) of the sulfide solid electrolyte containing no first crystal phase.

The BET specific surface area of the sulfide solid electrolyte of the present invention is preferably 4.0 $m^2/g$ or more and 10 $m^2/g$ or less, more preferably 5.0 $m^2/g$ or more and 9.0 $m^2/g$ or less, and still more preferably 6.0 $m^2/g$ or more and 8.0 $m^2/g$ or less.

In order to obtain good battery characteristics, it is preferable to uniformly distribute a sulfide solid electrolyte inside positive and negative electrodes. In order to realize the uniform distribution of the sulfide solid electrolyte, it is preferable to reduce the particle size of the sulfide solid electrolyte. Pulverization of a sulfide solid electrolyte can reduce the particle size of the sulfide solid electrolyte. However, the pulverization results in particles distorted in shape and secondary particles formed by aggregation of fine particles generated during the pulverization, and thus the specific surface area of the sulfide solid electrolyte sometimes increases. When the specific surface area of the sulfide solid electrolyte increases, the amount of solvent adsorbed on the particle surfaces tends to increase. Therefore, as the specific surface area of the sulfide solid electrolyte increases, the viscosity of the slurry containing the sulfide solid electrolyte increases. When the viscosity of the slurry increases, it is necessary to adjust the viscosity of the slurry using a large amount of the solvent, but an increase in amount of the solvent to be used is one of the causes of an increase in cost and a decrease in productivity of the battery. When the sulfide solid electrolyte reacts with atmospheric moisture, toxic hydrogen sulfide gas generates and the ionic conductivity decreases because of decomposition. As the specific surface area of the sulfide solid electrolyte increases, the area of the surface where the reaction between the sulfide solid electrolyte and atmospheric moisture occurs increases, and thus the generation of hydrogen sulfide gas and the decrease in the ionic conductivity are enhanced. Consequently, the cost increases in order to maintain a low moisture environment during the production of the battery, and the battery productivity decreases. In view of the above, in order to suppress an increase in specific surface area of the sulfide solid electrolyte, it is preferable to make the shape of the sulfide solid electrolyte closer to a true sphere.

The $D_{10}$ of the sulfide solid electrolyte of the present invention is not particularly limited, but is preferably 0.20 $\mu$m or more and 20 $\mu$m or less, more preferably 0.30 $\mu$m or more and 10 $\mu$m or less, and still more preferably 0.45 $\mu$m or more and 5.0 $\mu$m or less, from the viewpoint of uniformly distributing the sulfide solid electrolyte inside positive and negative electrodes and thus obtaining good battery characteristics.

The $D_{50}$ of the sulfide solid electrolyte of the present invention is not particularly limited, but is preferably 0.10 $\mu$m or more and 100 $\mu$m or less, more preferably 0.50 $\mu$m or more and 50 $\mu$m or less, and still more preferably 1.0 $\mu$m or more and 10 $\mu$m or less, from the viewpoint of uniformly distributing the sulfide solid electrolyte inside the positive and negative electrodes and obtaining good battery characteristics.

The $D_{95}$ of the sulfide solid electrolyte of the present invention is not particularly limited, but is preferably 0.10 $\mu$m or more and 500 $\mu$m or less, more preferably 1.0 $\mu$m or more and 300 $\mu$m or less, and still more preferably 2.0 $\mu$m or more and 150 $\mu$m or less, from the viewpoint of uniformly distributing the sulfide solid electrolyte inside positive and negative electrodes and thus obtaining good battery characteristics.

The value of (A x B)/C of the sulfide solid electrolyte of the present invention is not particularly limited, but is preferably 25 or less, more preferably 20 or less, and still more preferably 18 or less, from the viewpoint of making the effect of the present invention more remarkable.

The true density of the sulfide solid electrolyte of the present invention is not particularly limited, but is preferably 1.0 $g/cm^3$ or more and 4.0 $g/cm^3$ or less, more preferably 1.2 $g/cm^3$ or more and 3.0 $g/cm^3$ or less, and still more preferably 1.6 $g/cm^3$ or more and 2.5 $g/cm^3$ or less, from the viewpoint of making the effect of the present invention more remarkable.

The CS value of the sulfide solid electrolyte of the present invention is not particularly limited, but is preferably 0.10 $m^2/cm^3$ or more and 20 $m^2/cm^3$ or less, more preferably 0.30 $m^2/cm^3$ or more and 10 $m^2/cm^3$ or less, and still more preferably 0.50 $m^2/cm^3$ or more and 8.0 $m^2/cm^3$ or less, from the viewpoint of making the effect of the present invention more remarkable.

«Electrode composite material»

The electrode composite material of the present invention contains the sulfide solid electrolyte of the present invention and an active material.

In one embodiment, the electrode composite material of the present invention may be a negative-electrode composite material or a positive-electrode composite material. The negative-electrode composite material contains at least a negative-electrode active material, and the positive-electrode composite material contains at least a positive-electrode active material. The electrode composite material may contain a solid electrolyte, a conductive auxiliary agent and a binder, if necessary.

Examples of the negative-electrode active material include carbon materials, metal materials and the like, and one of these can be used alone or two or more thereof can be used in combination. As the carbon materials and the metal materials, materials generally known as a negative-electrode active material can be appropriately used, and thus the descriptions thereof are omitted here. The negative-electrode active material preferably has electron conductivity.

The positive-electrode active material is a substance capable of inserting and removing lithium ions, and can be appropriately selected from known positive-electrode active materials. Examples of the positive-electrode active material include metal oxides and sulfides. Examples of the metal oxides include transition metal oxides and the like.

The other descriptions concerning the electrode composite material can be the same as those of a general electrode composite material, and thus the descriptions thereof are omitted here.

«Slurry»

The slurry of the present invention contains the sulfide solid electrolyte of the present invention and a dispersion medium.

The content of the sulfide solid electrolyte of the present invention in the slurry of the present invention can be appropriately adjusted according to the purpose or the like of the slurry of the present invention. The slurry of the present invention can have various viscosities depending on the content of the sulfide solid electrolyte of the present invention, and can take various forms such as ink and paste depending on the viscosity. The content of the sulfide solid electrolyte of the present invention in the slurry of the present invention is preferably 10 mass% or more and 90 mass% or less, more preferably 20 mass% or more and 80 mass% or less, still more preferably 30 mass% or more and 70 mass% or less, based on the total mass of the slurry of the present invention.

The dispersion medium contained in the slurry of the present invention is not particularly limited as long as the dispersion medium is a liquid capable of dispersing the sulfide solid electrolyte of the present invention. Examples of the dispersion medium include water, organic solvents and the like. The dispersion medium may be one kind of solvent or a mixture of two or more kinds of solvents.

«Battery»

The battery of the present invention is a battery including a positive electrode layer, a negative electrode layer and a solid electrolyte layer located between the positive electrode layer and the negative electrode layer, and the solid electrolyte layer contains the sulfide solid electrolyte of the present invention. The positive electrode layer, the negative electrode layer and the solid electrolyte layer can be the same as those of a general battery, and thus the descriptions thereof are omitted here.

The battery of the present invention is preferably a solid-state battery, more preferably a lithium solid-state battery. The lithium solid-state battery may be a primary battery or a secondary battery, but is preferably a lithium secondary battery. The solid-state battery includes not only an aspect of a solid-state battery containing no liquid substance or gel-like substance as an electrolyte, but also an aspect of a solid-state battery containing, for example, 50 mass% or less, 30 mass% or less, 10 mass% or less of a liquid substance or gel-like substance as an electrolyte. Examples of the form of the solid-state battery include a laminated type, a cylindrical type, a square type and the like.

<<Method of producing sulfide solid electrolyte>>

Hereinafter, the method for producing a solid sulfide electrolyte of the present invention will be described.

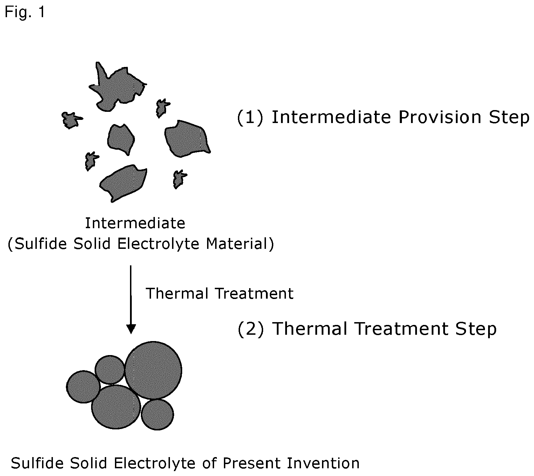

As shown in FIG. 1, the method for producing a sulfide solid electrolyte of the present invention includes the steps of:

(1) providing as an intermediate a sulfide solid electrolyte material that contains lithium (Li), phosphorus (P) and sulfur (S) elements; and

(2) subjecting the intermediate provided in step (1) to thermal treatment to obtain the sulfide solid electrolyte of the present invention.

The intermediate provided in step (1) is a precursor of the sulfide solid electrolyte of the present invention. In the present invention, the sulfide solid electrolyte of the present invention can be obtained by subjecting the intermediate obtained in step (1) to thermal treatment of step (2). In other words, in the present invention, the sulfide solid electrolyte of the present invention having a peak derived from the first crystal phase can be obtained by thermal treatment applied in step (2). Therefore, the intermediate becomes a material which does not have a peak derived from the first crystal phase. In addition, "having no peak" means that the criterion for determining the presence of the peak mentioned in the above «Sulfide solid electrolyte» is not satisfied.

The composition of the intermediate can be appropriately adjusted in consideration of the composition of the sulfide solid electrolyte of the present invention. The composition of the intermediate is usually the same as the composition of the sulfide solid electrolyte of the present invention. It is preferable that the intermediate preferably has a peak derived from the second crystal phase. The composition of the second crystal phase contained in the intermediate can be appropriately adjusted in consideration of the composition of the second crystal phase contained in the sulfide solid electrolyte of the present invention. The composition of the second crystal phase contained in the intermediate is usually the same as that of the second crystal phase contained in the sulfide solid electrolyte of the present invention.

The intermediate may be composed of the second crystal phase, or may be composed of the second crystal phase and one or more other phases. Since the other phases are the same as those mentioned in the above «Sulfide solid electrolyte», the description herein is omitted.

Since the content of the second crystal phase in the intermediate is the same as that of the second crystal phase in the sulfide solid electrolyte of the present invention mentioned in the above «Solid sulfide electrolyte», the description herein is omitted.

The $D_{10}$ of the intermediate is not particularly limited, but is preferably 0.10 $\mu$m or more and 1.0 $\mu$m or less, more preferably 0.20 $\mu$m or more and 0.80 $\mu$m or less, and still more preferably 0.30 $\mu$m or more and 0.60 $\mu$m or less, from the viewpoint of efficiently obtaining a sulfide solid electrolyte having a desired $D_{10}$ in step (2).

The $D_{50}$ of the intermediate is not particularly limited, but is preferably 0.10 $\mu$m or more and 2.0 $\mu$m or less, more preferably 0.20 $\mu$m or more and 1.8 $\mu$m, still more preferably 0.30 $\mu$m or more and 1.4 $\mu$m or less, and yet more preferably 0.40 $\mu$m or more and 1.0 $\mu$m or less, from the viewpoint of efficiently obtaining a desired sulfide solid electrolyte in step (2).

The $D_{95}$ of the intermediate is not particularly limited, but is preferably 0.50 $\mu$m or more and 5.0 $\mu$m or less, more preferably 0.60 $\mu$m or more and 4.5 $\mu$m or less, and still more preferably 0.70 $\mu$m or more and 4.0 $\mu$m or less, from the viewpoint of efficiently obtaining a sulfide solid electrolyte having a desired $D_{95}$ in step (2).

The value of $(A \times B)/C$ of the intermediate is not particularly limited, but may be more than 2.5 and 5.0 or less, 2.6 or more and 5.0 or less, 2.7 or more and 4.5 or less, or 2.8 or more and 4.0 or less, from the viewpoint of efficiently obtaining a desired sulfide solid electrolyte in step (2).

The BET specific surface area of the intermediate is not particularly limited, but is preferably 3.0 $m^2/g$ or more and 25 $m^2/g$ or less, more preferably 5.0 $m^2/g$ or more and 20 $m^2/g$ or less, and still more preferably 7.0 $m^2/g$ or more and 17 $m^2/g$ or less, from the viewpoint of efficiently obtaining a pulverized product having a desired BET specific surface area in step (2).

The true density of the intermediate is not particularly limited, but may be preferably 1.5 $g/cm^3$ or more and 5.0 $g/cm^3$ or less, more preferably 1.7 $g/cm^3$ or more and 4.5 $g/cm^3$ or less, and still more preferably 1.9 $g/cm^3$ or more and 4.0 $g/cm^3$ or less, from the viewpoint of efficiently obtaining a desired sulfide solid electrolyte in step (2).

The CS value of the intermediate is not particularly limited, but may be preferably 1.0 $m^2/cm^3$ or more and 25 $m^2/cm^3$ or less, more preferably 2.0 $m^2/cm^3$ or more and 20 $m^2/cm^3$ or less, and still more preferably 3.0 $m^2/cm^3$ or more and 15 $m^2/cm^3$ or less, from the viewpoint of efficiently obtaining a desired sulfide solid electrolyte in step (2).

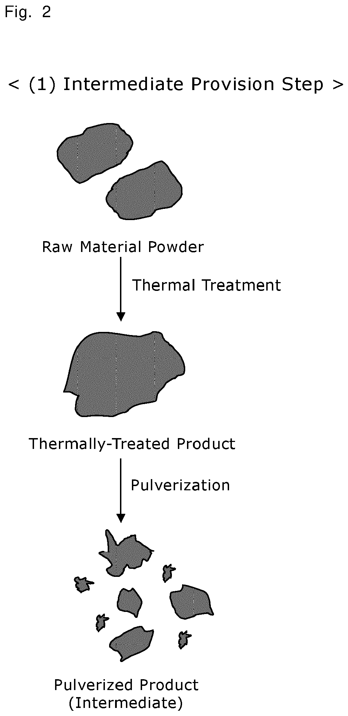

In the present invention, for example, as shown in FIG. 2, in step (1), it is preferable that a thermally-treated product obtained by subjecting a raw material powder containing lithium (Li), phosphorus (P) and sulfur (S) elements to thermal treatment is pulverized, and the pulverized product obtained here is provided as an intermediate. This makes it possible to efficiently provide a first raw material powder having desired characteristics.

The raw material powder is a raw material for the intermediate and is usually in the form of a powder. The composition of the raw material powder can be appropriately adjusted in consideration of the composition of the intermediate. The composition of the raw material powder is usually the same as that of the intermediate. The raw material powder has neither a peak derived from the first crystal phase nor a peak derived from the second crystal phase. Depending on the composition of the raw material powder, a thermally-treated product having a peak derived from the second crystal phase can be obtained by subjecting the raw material powder to thermal treatment.

For example, it is possible to use, as the raw material powder, a mixture powder containing a powder of one or more lithium (Li)-containing compounds, a powder of one or more phosphorus (P)-containing compounds, a powder of one or more sulfur (S)-containing compounds and optionally a powder of one or more halogen (X)-containing compounds. When a lithium (Li)-containing, phosphorus (P)-containing or halogen (X)-containing compound contains a sulfur (S) element, this compound also corresponds to a sulfur (S)-containing compound. Therefore, the compound containing a lithium (Li), phosphorus (P) or halogen (X) element may be the same as the compound containing a sulfur (S) element.

The lithium (Li)-containing, phosphorus (P)-containing, sulfur (S)-containing and halogen (X)-containing compounds may be the same as known compounds generally used as a raw material for a sulfide solid electrolyte. Thus, the descriptions thereof herein are omitted.

The raw material powder can be prepared by mixing a powder of one or more lithium (Li)-containing compounds, a powder of one or more phosphorus (P)-containing compounds, a powder of one or more sulfur (S)-containing compounds and optionally a powder of one or more halogen (X)-containing compounds. The mixing can be performed using, for example, a mortar, a ball mill, a vibration mill, a rolling mill, a bead mill, a kneader or the like. The raw material powder may contain a reaction product produced by the mixing treatment. The mixing is preferably performed with a force to maintain the crystallinity of the raw material powder.

The raw material powder is, for example, a mixture powder containing a $Li_2S$ powder, a $P_2S_5$ powder, a LiCl powder and/or a LiBr powder.

In step (1), the thermal treatment of the raw material powder is preferably performed under the conditions that make it possible to produce a sulfide solid electrolyte containing a second crystal phase. The temperature of the thermal treatment is preferably 300°C or more and 550°C or less, more preferably 350°C or more and 500°C or less, still more preferably 400°C or more and 520°C or less, and yet more preferably 450°C or more and 480°C or less. The duration of the thermal treatment can be appropriately adjusted according to the composition of the first raw material powder, the temperature of the thermal treatment and the like. The duration of the thermal treatment is preferably 1 hour or more and 10 hours or less, more preferably 2 hours or more and 8 hours or less, and still more preferably 3 hours or more and 6 hours or less. The thermal treatment may be performed under an inert gas atmosphere such as a nitrogen or argon atmosphere, but is preferably performed in a hydrogen sulfide gas atmosphere.

The pulverization of the thermally-treated product (sintered product) obtained by the thermal treatment of the raw material powder is performed so that a pulverized product having desired characteristics can be obtained. Thus, the intermediate can be obtained having desired characteristics. The preferred ranges of $D_{10}$, $D_{50}$ and $D_{95}$ of the pulverized product are the same as the preferred ranges of the $D_{10}$, $D_{50}$ and $D_{95}$ of the intermediate.

The thermally-treated product (sintered product) obtained by the thermal treatment of the raw material powder can be pulverized by a dry or wet method using, for example, a jet mill, a ball mill, a bead mill or the like. When the pulverization is performed in a wet method, a hydrocarbon-based solvent is preferably used as a solvent.

After the pulverization, the pulverized product may be classified using a sieve having a predetermined opening size. The pulverization conditions (for example, the rotation speed of the pulverizer, the process number of the pulverization treatment, the duration of the pulverization treatment, the energy applied to the thermally-treated product and the like), the opening size of the sieve used for classification and the like can be appropriately adjusted depending on the particle size of the pulverized product to be obtained.

The thermal treatment of the intermediate provided in step (1) is performed at a temperature at which grain growth occurs. Therefore, the particle size of the thermally-treated product obtained by the thermal treatment of the intermediate is larger than that of the intermediate. For example, the $D_{10}$ of the thermally-treated product may be 1 time or more and 20 times or less, 1.05 times or more and 15 times or less, or 1.1 times or more and 10 times or less as large as the $D_{10}$ of the intermediate. Further, the $D_{50}$ of the thermally-treated product may be, for example, 1.1 times or more and 200 times or less, 1.2 times or more and 100 times or less, or 1.3 times or more and 50 times or less as large as the $D_{50}$ of the intermediate. Furthermore, for example, the $D_{95}$ of the thermally-treated product may be 1.2 times or more and 200 times or less, 1.4 times or more and 150 times or less, or 2 times or more and 100 times or less as large as the $D_{95}$ of the intermediate.

The thermal treatment of the intermediate provided in step (1) alleviates the strain inside the solid electrolyte particles contained in the intermediate, and increases the crystallinity, and promotes sintering of the fine particles generated in the pulverization step.

The thermal treatment of the intermediate provided in step (1) is performed under the condition that a sulfide solid electrolyte containing the first crystal phase is produced. The temperature of the thermal treatment is preferably 200°C or more and 500°C or less, more preferably 200°C or more and 450°C or less, still more preferably 220°C or more and 420°C or less, and yet more preferably 240°C or more and 400°C or less. The duration of the thermal treatment of the intermediate can be appropriately adjusted according to the composition of the intermediate, the temperature of the thermal treatment and the like. From the viewpoint of obtaining a sulfide solid electrolyte having a small specific surface area in step (2), the duration of the thermal treatment is preferably 0.5 hours or more and 5 hours or less, more preferably 1.5 hours or more and 4 hours or less, and still more preferably 2 hours or more and 3 hours or less. In step (2), The thermal treatment may be performed under a stream of hydrogen sulfide, but is preferably performed in an inert gas atmosphere such as a nitrogen or argon atmosphere, from the viewpoint of efficiently obtaining a sulfide solid electrolyte containing a first crystal phase (preferably, a sulfide solid electrolyte containing a first crystal phase and a second crystal phase).

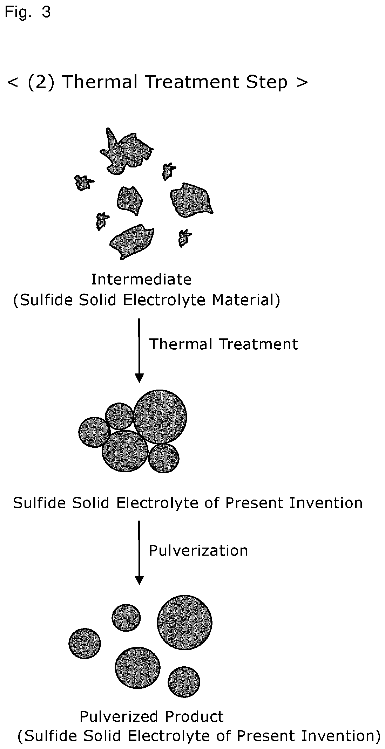

The thermally-treated product (sintered product) obtained by the thermal treatment of the intermediate may be, for example, pulverized as necessary, as shown in FIG. 3. The thermally-treated product (sintered product) obtained by thermal treatment of the intermediate can be pulverized by a dry method or a wet method using, for example, a jet mill, a ball mill, a bead mill or the like.

After the pulverization, the pulverized product may be classified using a sieve having a predetermined opening size. The pulverization conditions (for example, the rotation speed of the pulverizer, the process number of the pulverization treatment, the duration of the pulverization treatment, the energy applied to the thermally-treated product and the like), the opening size of the sieve used for classification and the like can be appropriately adjusted according to the particle size of the pulverized product to be obtained.

EXAMPLES

In each of the Examples, the characteristics of the solid electrolyte were evaluated according to the following methods.

<Composition>

The sulfide solid electrolyte sample obtained in each of the Examples was completely dissolved and the elemental composition of the sample was analyzed by ICP emission spectrometry.

<Crystal phase>

The crystal phase of the sulfide solid electrolyte sample was analyzed by an X-ray diffraction method (XRD, Cu source) to obtain an X-ray diffraction pattern. In the X-ray diffraction method, an XRD apparatus "Smart Lab" manufactured by Rigaku Corporation was used under the conditions of scanning axis: $2\theta/\theta$, scanning range: 10 to 140 deg, step size: 0.01 deg, and scanning rate: 1 deg/min. Under the conditions, the maximum peak intensity becomes 10,000 counts or more. In Examples 1 to 3, the X-ray diffraction was performed in a cell unexposed to air.

<$D_{10}$, $D_{50}$ and $D_{95}$>

The particle size distribution of the sulfide solid electrolyte was measured by a laser diffraction scattering particle size distribution measurement method, according to the following procedure. Using an automatic sample feeder for a laser diffraction particle size distribution measuring device ("Microtrac SDC" manufactured by NIKKISO CO., LTD.), 30 W ultrasonic waves were applied for 60 seconds to the measurement sample containing the sulfide solid electrolyte, with the flow velocity of the measurement sample containing the sulfide solid electrolyte set at 50%.

Then, the particle size distribution was measured using a laser diffraction particle size distribution measuring device "MT3000II" manufactured by NIKKISO CO., LTD. From the obtained chart representing the volume-based particle size distribution, the particle sizes at the cumulative volumes of 10 vol%, 50 vol% and 95 vol% were determined as $D_{10}$, $D_{50}$ and $D_{95}$, respectively. When $D_{10}$, $D_{50}$ and $D_{95}$ were measured, the organic solvent was passed through a 60 $\mu$m filter, the solvent refractive index was 1.50, the particle transmittance condition was transmissive, the particle refractive index was 1.59, the shape was non-spherical, the measurement range was 0.133 $\mu$m to 704.0 $\mu$m, and the measurement duration was 10 seconds. The measurement was thus performed twice, and the average values of the obtained measured values were used as $D_{10}$, $D_{50}$ and $D_{95}$.

The measurement sample containing the sulfide solid electrolyte was prepared as follows. First, 0.3 g of the sulfide solid electrolyte and 5.7 g of liquid containing a dispersion agent (mass of toluene: mass of dispersion agent (SN dispersant 9228 manufactured by San Nopco Ltd.) = 19:1 (mass ratio)) were manually mixed to prepare a slurry containing the sulfide solid electrolyte. Next, 6 mL of the slurry containing the sulfide solid electrolyte was placed into an organic solvent (toluene), thus preparing a measurement sample containing the sulfide solid electrolyte. In the measurement sample containing the sulfide solid electrolyte, the sulfide solid electrolyte is dispersed without being agglomerated. As long as the sulfide solid electrolyte can be dispersed in the measurement sample containing the sulfide solid electrolyte without being agglomerated, the type and amount of the dispersant can be appropriately changed.

<BET specific surface area>

The BET specific surface area was calculated by the following method. Using a specific surface area measuring device "BELSORP-minIII" manufactured by Microtrac BEL Corp., the adsorption and desorption isotherms were measured by a gas adsorption method at the constant volume, and the BET specific surface area was calculated by the multipoint method. The pretreatment was performed at 120°C for 30 minutes or more in a reduced pressure environment. He and $N_2$ were used as the purge gas and the adsorbate, respectively.

<True density>

The true density was calculated by the gas replacement method using a true density evaluation device "BELPycno" manufactured by Microtrac BEL Corp. The pretreatment was performed 5 times by purging. For the measurement, a 10 $cm^3$ alumina cell was used, and the sample was filled to about 70% of the cell.

<CS value>

The particle size distribution was measured using a laser diffraction particle size distribution measuring device "MT3000II" manufactured by NIKKISO CO., LTD. in the same manner as in the measurement of $D_{10}$, $D_{50}$ and $D_{95}$. From the obtained chart representing the volume-based particle size distribution, the CS value was calculated.

<Comparative Example 1>

A $Li_2S$ powder, a $P_2S_5$ powder, a LiCl powder and a LiBr powder were each weighed so that the composition would be $Li_{5.4}PS_{4.4}Cl_{0.8}Br_{0.8}$ and the total amount would be 5 g, and the mixture was pulverized and mixed in toluene for 15 hours using a ball mill to obtain a raw material powder. The characteristics ($D_{50}$ and $D_{95}$) of the obtained raw material powder were evaluated. $D_{50}$ and $D_{95}$ of the raw material powders were 4.58 $\mu m$ and 16.55 $\mu m$, respectively. The measurement of $D_{50}$ and $D_{95}$ of the raw material powder was performed in the same manner as above, except that the measurement sample containing the raw material powder was used. The measurement sample containing the raw material powder was prepared as follows. The raw material powder was pulverized and mixed for 15 hours in toluene using a ball mill to obtain a raw material slurry. Next, a few drops of a dispersant (SN Dispersant 9228, manufactured by San Nopco Ltd.) were added dropwise to an organic solvent (toluene), and then a few drops of a slurry containing the raw material powder were added dropwise to fabricate a measurement sample containing the raw material powder.

After the obtained raw material slurry was filled in a carbon container and subjected to thermal treatment in a tubular electric furnace at 300°C for 4 hours, and then at 500°C for 4 hours with the temperature rise and fall rate of 200°C/hour while hydrogen sulfide gas was circulated at 1.0 L/min.

The thermally-treated product (sintered product) thus obtained was pulverized to obtain a pulverized product (sulfide solid electrolyte of Comparative Example 1). The pulverization was performed in two stages using a planetary ball mill (manufactured by Fritsch Co., Ltd). In the first pulverization step, a planetary ball mill (manufactured by Fritsch Co., Ltd) was used. In a zirconia container having a capacity of 80 $cm^3$, 5 g of the sulfide solid electrolyte (thermally-treated product), 10 g of dehydrated heptane and 90 g of 5-mm $ZrO_2$ balls were placed, and the mixture was pulverized at a rotation rate of 100 rpm for 3 hours. The obtained slurry was dried in vacuum to obtain a pulverized product of the first step. The second pulverization step was performed using the obtained pulverized product of the first step. In the second pulverization step, 2 g of the sulfide solid electrolyte (pulverized product of the first step), 0.06 g of dispersion agent (butyl acetate), 10 g of super dehydrated toluene and 90 g of 0.8-mm $ZrO_2$ balls were placed in a zirconia container having a capacity of 80 $cm^3$, and the mixture was pulverized at a rotation rate of 100 rpm for 1 hour. The obtained slurry was subjected to ball separation and solid-liquid separation, dried in vacuum at 80°C, and then sized through a sieve having an opening size of 53 $\mu m$ to obtain a sulfide solid electrolyte of Comparative Example 1.

Weighing, mixing, installation in an electric furnace, retrieval from the electric furnace, pulverization, and sizing processes were all performed in a glovebox replaced with sufficiently dried Ar gas (dew point of -60°C or less).

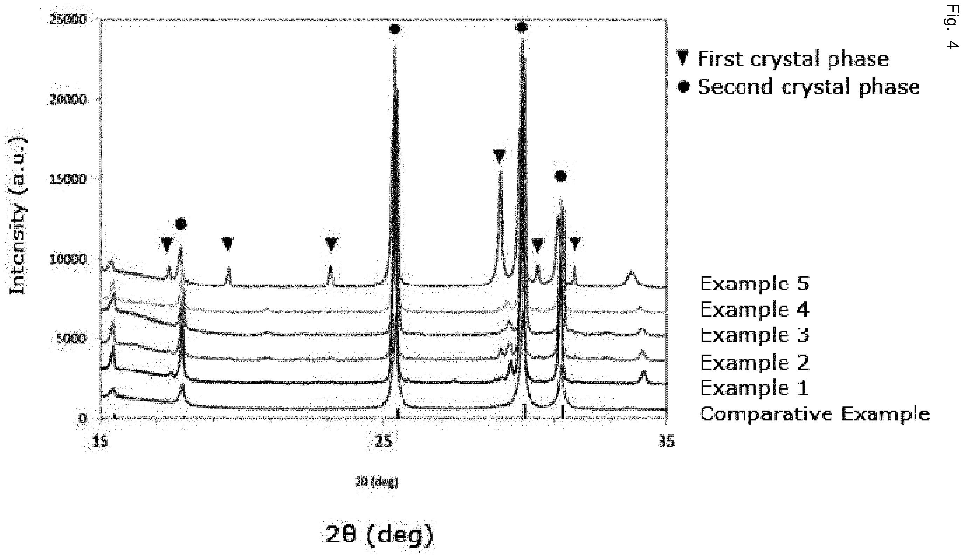

The evaluation results of the sulfide solid electrolyte thus obtained are shown in Table 1A and FIG. 4.

As shown in FIG. 4, the sulfide solid electrolyte does not have a peak derived from the first crystal phase in the X-ray diffraction pattern measured with $CuK\alpha1$ ray, but had a peak derived from the second crystal phase.

<Example 1>

The sulfide solid electrolyte of Comparative Example 1 was used as a raw material for the sulfide solid electrolyte of Example 1. The sulfide solid electrolyte of Comparative Example 1 was subjected to thermal treatment at 270°C for 2 hours in an environment in which argon gas was allowed to flow at a flow rate of 1 L/min to obtain a thermally-treated product (sulfide solid electrolyte of Example 1).

The evaluation results of the sulfide solid electrolyte thus obtained are shown in Table 1A and FIG. 4.

As shown in FIG. 4, the sulfide solid electrolyte had peaks derived from the first crystal phase and the second crystal phase.

<Example 2>

The same operation as in Example 1 was performed, except that the thermal treatment temperature of the solid electrolyte was changed to 300°C. The evaluation results are shown in Table 1A and FIG. 4.

As shown in FIG. 4, the sulfide solid electrolyte had peaks derived from the first crystal phase and the second crystal phase.

<Example 3>

The same operation as in Example 1 was performed, except that the thermal treatment temperature of the sulfide solid electrolyte was changed to 350°C. The evaluation results are shown in Table 1B and FIG. 4.

As shown in FIG. 4, the sulfide solid electrolyte had peaks derived from the first crystal phase and the second crystal phase.

<Example 4>

In a zirconia container having a capacity of 80 $cm^3$, 2 g of the sulfide solid electrolyte obtained in Example 3, 0.06 g of a dispersant (butyl acetate), 10 g of super dehydrated toluene and 90 g of 0.8 mm $ZrO_2$ balls were placed, and the pulverization treatment was performed at 100 rpm for 10 minutes.

The slurry thus obtained was subjected to ball separation and solid-liquid separation, dried in vacuum at 80°C, and then sized through a sieve having an opening size of 53 $\mu$m to obtain a sulfide solid electrolyte of Example 4. The evaluation results are shown in Table 1B and FIG. 4.

As shown in FIG. 4, the sulfide solid electrolyte had peaks derived from the first crystal phase and the second crystal phase.

<Example 5>

The same operation as in Comparative Example 1 was performed, except that the thermal treatment conditions for the raw material powder were changed to conditions at 300°C in an $H_2S$ atmosphere for 8 hours, and the thermally-treated product was not subjected to second pulverization. The evaluation results are shown in Table 1B and FIG. 4.

As shown in FIG. 4, the sulfide solid electrolyte had peaks derived from the first crystal phase and the second crystal phase.

[Table 1A]

Table 1A

| | | Sulfide solid electrolyte |
|---|---|---|
| Comparative Example 1 | Composition | $Li_{5.4}PS_{4.4}Cl_{0.8}Br_{0.8}$ |
| | Crystal phase | Second crystal phase |
| | $D_{10}$ ($\mu$m) | 0.42 |
| | $D_{50}$ ($\mu$m) | 0.72 |
| | $D_{95}$ ($\mu$m) | 1.66 |
| | BET specific surface area ($m^2$/g) | 12.0 |
| | True density (g/$cm^3$) | 2.1 |
| | CS VALUE ($m^2$/$cm^3$) | 8.9 |

(continued)

|  |  | Sulfide solid electrolyte |
|---|---|---|
| Example 1 | Composition | $Li_{5.4}PS_{4.4}Cl_{0.8}Br_{0.8}$ |
|  | Crystal phase | First crystal phase, Second crystal phase |
|  | $D_{10}$ ($\mu$m) | 0.74 |
|  | $D_{50}$ ($\mu$m) | 30.09 |
|  | $D_{95}$ ($\mu$m) | 74.41 |
|  | BET specific surface area ($m^2$/g) | 6.0 |
|  | True density (g/$cm^3$) | 2.1 |
|  | CS VALUE ($m^2$/$cm^3$) | 2.2 |
| Example 2 | Composition | $Li_{5.4}PS_{4.4}Cl_{0.8}Br_{0.8}$ |
|  | Crystal phase | First crystal phase, Second crystal phase |
|  | $D_{10}$ ($\mu$m) | 2.12 |
|  | $D_{50}$ ($\mu$m) | 40.73 |
|  | $D_{95}$ ($\mu$m) | 108.8 |
|  | BET specific surface area ($m^2$/g) | 5.8 |
|  | True density (g/$cm^3$) | 2.1 |
|  | CS VALUE ($m^2$/$cm^3$) | 0.8 |

[Table 1B]

Table 1B

|  |  | Sulfide solid electrolyte |
|---|---|---|
| Example 3 | Composition | $Li_{5.4}PS_{4.4}Cl_{0.8}Br_{0.8}$ |
|  | Crystal phase | First crystal phase, Second crystal phase |
|  | $D_{10}$ ($\mu$m) | 3.55 |
|  | $D_{50}$ ($\mu$m) | 54.80 |
|  | $D_{95}$ ($\mu$m) | 161.40 |
|  | BET specific surface area ($m^2$/g) | 5.1 |
|  | True density (g/$cm^3$) | 2.1 |
|  | CS VALUE ($m^2$/$cm^3$) | 0.7 |
| Example 4 | Composition | $Li_{5.4}PS_{4.4}Cl_{0.8}Br_{0.8}$ |
|  | Crystal phase | First crystal phase, Second crystal phase |
|  | $D_{10}$ ($\mu$m) | 0.38 |
|  | $D_{50}$ ($\mu$m) | 0.60 |
|  | $D_{95}$ ($\mu$m) | 1.18 |
|  | BET specific surface area ($m^2$/g) | 6.7 |
|  | True density (g/$cm^3$) | 2.1 |
|  | CS VALUE ($m^2$/$cm^3$) | 10.6 |

(continued)

|  |  | Sulfide solid electrolyte |
|---|---|---|
| Example 5 | Composition | $Li_{5.4}PS_{4.4}Cl_{0.8}Br_{0.8}$ |
|  | Crystal phase | First crystal phase, Second crystal phase |
|  | $D_{10}$ ($\mu$m)<br>$D_{50}$ ($\mu$m) | 0.67<br>4.04 |
|  | $D_{95}$ ($\mu$m) | 107.90 |
|  | BET specific surface area ($m^2/g$) | 8.3 |
|  | True density ($g/cm^3$) | 2.1 |
|  | CS VALUE ($m^2/cm^3$) | 3.1 |

As shown in Table 1, in Examples 1 to 5, it was possible to obtain sulfide solid electrolytes containing Li, P, and S, which have peaks derived from the first crystal phase in the X-ray diffraction pattern.

In the X-ray diffraction pattern shown in FIG. 4, when peaks derived from the first crystal phase, which are present at positions of $2\theta = 19.5 \pm 1.00°$, $23.2 \pm 1.00°$ and $29.2 \pm 0.500°$ are defined as "peak $P_1$", "peak $P_2$" and "peak $P_3$", respectively, and a peak derived from the second crystal phase, which is present at position of $2\theta = 29.62° \pm 1.00°$ (peak having a maximum intensity of peaks derived from the second crystal phase) is defined as "peak $P_A$", the percentage of the intensity of the peak $P_1$ to the intensity of peak $P_A$ (intensity of the peak Pi/intensity of the peak $P_A \times 100$), the percentage of the intensity of the peak $P_2$ to the intensity of peak $P_A$ (intensity of the peak $P_2$/intensity of the peak $P_A \times 100$) and the percentage of the intensity of the peak $P_3$ to the intensity of peak $P_A$ (intensity of the peak $P_3$/intensity of the peak $P_A \times 100$) in Examples 1 to 5 were as shown in Tables 2 to 4.

[Table 2]

Table 2

|  | Intensity of Peak $P_A$ | Intensity of Peak $P_1$ | Percentage of Intensity of Peak $P_1$ to Intensity of Peak $P_A$ |
|---|---|---|---|
| Example 1 | 17844.13 | 177.6 | 0.1% |
| Example 2 | 19987.76 | 104.5 | 0.5% |
| Example 3 | 17296.93 | 167.4 | 1.0% |
| Example 4 | 15624.94 | 107.5 | 0.7% |
| Example 5 | 7773.92 | 1189.1 | 15.2% |

[Table 3]

Table 3

|  | Intensity of Peak $P_A$ | Intensity of Peak $P_2$ | Percentage of Intensity of Peak $P_2$ to Intensity of Peak $P_A$ |
|---|---|---|---|
| Example 1 | 17844.13 | 866.9 | 5.0% |
| Example 2 | 19987.76 | 665.4 | 3.3% |
| Example 3 | 17296.93 | 150.4 | 0.8% |
| Example 4 | 15624.94 | 84.6 | 0.5% |
| Example 5 | 7773.92 | 1299.8 | 16.7% |

[Table 4]

Table 4

| | Intensity of Peak P$_A$ | Intensity of Peak P$_3$ | Percentage of Intensity of Peak P$_3$ to Intensity of Peak P$_A$ |
|---|---|---|---|
| Example 1 | 17844.13 | 408.17 | 2.3% |
| Example 2 | 19987.76 | 693.12 | 3.5% |
| Example 3 | 17296.93 | 413.15 | 2.4% |
| Example 4 | 15624.94 | 290.9 | 1.9% |
| Example 5 | 7773.92 | 7193.45 | 92.5% |

**Claims**

1. A sulfide solid electrolyte, comprising lithium (Li), phosphorus (P) and sulfur (S) elements, wherein, in an X-ray diffraction pattern measured with CuK$\alpha$1 radiation, peaks are present at positions of $2\theta = 23.2° \pm 1.0°$ and $29.2° \pm 0.5°$.

2. The sulfide solid electrolyte according to claim 1, wherein, in an X-ray diffraction pattern measured with CuK$\alpha$1 radiation, peaks are present at positions of $2\theta = 19.5° \pm 1.0°$ and $30.5° \pm 0.5°$.

3. The sulfide solid electrolyte according to claim 1 or 2, wherein, in an X-ray diffraction pattern measured with CuK$\alpha$1 radiation, peaks are present at positions of $2\theta = 15.34° \pm 1.00°$ and $25.19° \pm 1.00°$.

4. The sulfide solid electrolyte according to any one of claims 1 to 3, wherein the sulfide solid electrolyte has a BET specific surface area of 3 m$^2$/g or more and 11 m$^2$/g or less.

5. The sulfide solid electrolyte according to any one of claims 1 to 4, wherein the sulfide solid electrolyte has a composition represented by the following formula:

$$Li_aPS_bX_c$$

wherein X represents at least one halogen element, a represents 3.0 or more and 6.5 or less, b represents 3.5 or more and 5.5 or less, and c represents 0.50 or more and 3.0 or less.

6. The sulfide solid electrolyte according to claim 5, wherein the at least one halogen (X) element comprises at least one of chlorine (Cl) and bromine (Br) elements.

7. An electrode composite material, comprising the sulfide solid electrolyte according to any one of claims 1 to 6 and an active material.

8. A slurry, comprising the sulfide solid electrolyte according to any one of claims 1 to 6 and a dispersion medium.

9. A battery, comprising a positive electrode layer, a negative electrode layer and a solid electrolyte layer located between the positive electrode layer and the negative electrode layer, wherein the solid electrolyte layer comprises the sulfide solid electrolyte according to any one of claims 1 to 6.

10. A method of producing a sulfide solid electrolyte, the method comprising the steps of:

(1) providing as an intermediate a sulfide solid electrolyte material that comprises lithium (Li), phosphorus (P) and sulfur (S) elements; and
(2) subjecting the intermediate to thermal treatment to obtain the sulfide solid electrolyte according to any one of claims 1 to 6.

Fig. 1

(1) Intermediate Provision Step

Intermediate
(Sulfide Solid Electrolyte Material)

Thermal Treatment

(2) Thermal Treatment Step

Sulfide Solid Electrolyte of Present Invention

Fig. 2

< (1) Intermediate Provision Step >

Raw Material Powder

Thermal Treatment

Thermally-Treated Product

Pulverization

Pulverized Product
(Intermediate)

Fig. 3

< (2) Thermal Treatment Step >

Intermediate
(Sulfide Solid Electrolyte Material)

Thermal Treatment

Sulfide Solid Electrolyte of Present Invention

Pulverization

Pulverized Product
(Sulfide Solid Electrolyte of Present Invention)

Fig. 4

**INTERNATIONAL SEARCH REPORT**

International application No.

PCT/JP2020/048634

**A. CLASSIFICATION OF SUBJECT MATTER**
H01M 4/13(2010.01)i; H01M 4/139(2010.01)i; H01M 4/62(2006.01)i; H01M 10/052(2010.01)i; H01M 10/0562(2010.01)i; H01B 1/06(2006.01)i; H01B 1/10(2006.01)i; H01B 13/00(2006.01)i
FI:     H01B1/10; H01B1/06 A; H01B13/00 Z; H01M10/0562; H01M10/052; H01M4/62 Z; H01M4/13; H01M4/139
According to International Patent Classification (IPC) or to both national classification and IPC

**B. FIELDS SEARCHED**

Minimum documentation searched (classification system followed by classification symbols)
H01M4/13; H01M4/139; H01M4/62; H01M10/052; H01M10/0562; H01B1/06; H01B1/10; H01B13/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/003333 A1 (MITSUI MINING & SMELTING CO., LTD.) 04 January 2018 (2018-01-04) paragraphs [0052], [0059] | 1-10 |
| A | WO 2019/172106 A1 (IDEMITSU KOSAN CO., LTD.) 12 September 2019 (2019-09-12) | 1-10 |

☐ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 February 2021 (26.02.2021) | 09 March 2021 (09.03.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2020/048634

| Patent Documents referred in the Report | Publication Date | Patent Family | Publication Date |
|---|---|---|---|
| WO 2018/003333 A1 | 04 Jan. 2018 | US 2019/0312304 A1 paragraphs [0082], [0092] JP 2018-067552 A EP 3454405 A1 KR 10-2019-0007028 A CN 109417194 A | |
| WO 2019/172106 A1 | 12 Sep. 2019 | US 2021/0005924 A1 CN 111788641 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001250580 A
- JP 2016024874 A
- JP 2010033732 A

- JP 2011044249 A
- JP 2012043646 A
- JP 2019036536 A